# EUROPEAN PATENT SPECIFICATION

(11) **EP 2 958 775 B1**
(45) Date of publication and mention of the grant of the patent: **24.10.2018**
(21) Application number: 13875710.9
(22) Date of filing: 20.02.2013
(51) Int. Cl.: B60R 21/231, B60R 21/36

(54) **AN AIRBAG DEVICE WITH DIRECTED INFLATION**
AIRBAG-VORRICHTUNG MIT GERICHTETER INFLATION
DISPOSITIF D'AIRBAG AVEC GONFLEMENT DIRIGÉ

(43) Date of publication of application: 30.12.2015
(73) Proprietor: Autoliv Development AB, 447 83 Vårgårda (SE)
(72) Inventor: MAZANEK, Jan, S-42750 Billdal (SE); LINDBERG, Ken, S-44146 Alingsås (SE); MAGNUSSON, Ulf, S-44157 Alingsås (SE)
(74) Representative: Sandstedt, Jonas Sven James
(86) International application number: PCT/SE2013/050146
(87) International publication number: WO 2014/129942

(56) References cited:
- EP-A1- 2 502 794
- EP-A1- 2 502 794
- WO-A1-2008/117496
- DE-A1-102006 054 387
- DE-A1-102012 003 746
- JP-A- 2007 038 754
- US-A1- 2007 023 223

## Description

The present invention relates to an airbag arranged to be inflated by an inflating device. The airbag comprises at least two airbag parts, each airbag part comprising at least one bonding and at least one airbag aperture. Each bonding is running towards at least one corresponding airbag aperture. The airbags parts are attached to each other by means of circumferential bondings such that the airbags part are in fluid connection with each other via said apertures, each bonding intersecting at least one circumferential bonding at least at one corresponding position.

Today, many vehicles are constructed to comprise at least one exterior airbag, intended to be inflated in the case of a collision with a pedestrian and to alleviate the collision force that the pedestrian is subject to. Such an exterior airbag is for example mounted in a designated housing at the rear end of the vehicle hood, and it is desired that the inflated airbag at least partly follows the inclination of the windscreen and the A-pillars. Many previous arrangements have an airbag which inflates in an upward direction from the hood, such that an angle is created between the longitudinal extension of the inflated airbag and the windscreen.

One previously known arrangement for directing an airbag is to use straps mounted between different positions on an airbag, or between an airbag and a fixed structural component. The straps are arranged such that a desired bend is accomplished when inflation occurs. Such arrangements are relatively complicated and require special mounting.

EP 2502794 discloses a pedestrian air bag according to the preamble of claim 1 where the vehicle hood guides the inflated airbag to bend towards the windscreen. Other types of pedestrian air bags depend on aerodynamic forces due to vehicle speed, or only the force of a pedestrian which impacts the airbag.

However, the airbag arrangements according to prior art can be further improved, for example speed independent and independent of vehicle design. It is also desired to reduce the risk of oscillation of an inflated airbag. Furthermore, it is desired to obtain an airbag arrangement, at any position at a vehicle, which can inflate in a predetermined direction.

It is thus desired to obtain an airbag arrangement which is arranged to inflate in a predetermined direction without having to rely on any certain design features of a vehicle or undetermined parameters such as velocity.

It is an object of the present invention to provide an airbag arrangement that is arranged to inflate in a predetermined direction without the restrictions mentioned above, resting against vehicle parts in a desired manner when inflated.

Said object is achieved by means of an airbag according to claim 1 which is arranged to be inflated by an inflating device. The airbag comprises at least two airbag parts, each airbag part comprising at least one bonding and at least one airbag aperture. Each bonding is running towards at least one corresponding airbag aperture. The airbags parts are attached to each other by means of circumferential bondings such that the airbags part are in fluid connection with each other via said apertures, each bonding intersecting at least one circumferential bonding at least at one corresponding position.

For each two airbag bondings comprised in different airbag parts, which airbag bondings are closer to each other than to any other airbag bonding when intersecting a circumferential bonding, these airbag bondings are positioned a corresponding certain distance from each other when intersecting said circumferential seam. Each distance creates an offset in a corresponding direction along the corresponding circumferential seam.

According to an example, the airbag comprises a first airbag part and a second airbag part. The first airbag part comprises a first airbag bonding that is attaching a first sheet with a second sheet and running to a first airbag aperture, and the second airbag part comprises a second airbag bonding that is attaching a first sheet with a second sheet and running to a second airbag aperture. The first airbag part is attached to the second airbag part by a first circumferential bonding such that said airbags part are in fluid connection with each other via said apertures. Each one of the first airbag bonding and the second airbag bonding are intersecting the first circumferential bonding at least at one corresponding position. For a first airbag bonding and a second airbag bonding that are closer to each other than to any other airbag bonding when intersecting the circumferential bonding, the airbag bondings are positioned a corresponding certain distance from each other when intersecting said circumferential seam. Each distance is creating an offset in a corresponding direction along the corresponding circumferential seam.

According to another example, the airbag comprises a third airbag part comprising a third airbag bonding that is attaching a first sheet with a second sheet and running towards a third airbag aperture. The second airbag part comprises a fourth airbag bonding, the second airbag bonding and the fourth airbag bonding running between the second airbag aperture and a fourth airbag aperture comprised in the second airbag part. The third airbag part is attached to the second airbag part by a second circumferential bonding such that the airbag parts are in fluid connection with each other, on one hand, via the first airbag aperture and the second aperture, and, on the other hand, via the third airbag aperture and the fourth airbag aperture.

Other examples are evident from the dependent claims.

A number of advantages are obtained by means of the present invention. Mainly, an air bag arrangement is provided which is arranged to inflate in a predetermined direction without having to rely on any certain design features of a vehicle or undetermined parameters such as velocity.

### BRIEF DESCRIPTION OF THE DRAWINGS

The present invention will now be described more in detail with reference to the appended drawings, where:
- Figure 1: shows a schematic side view of a vehicle;
- Figure 2: shows a schematic top view of the front part of a vehicle;
- Figure 3: shows a schematic top view of the front part of a vehicle with an airbag according to the present invention inflated;
- Figure 4: shows unassembled airbag parts;
- Figure 5: shows partially assembled airbag parts; and
- Figure 6: shows an assembled airbag.

### DETAILED DESCRIPTION

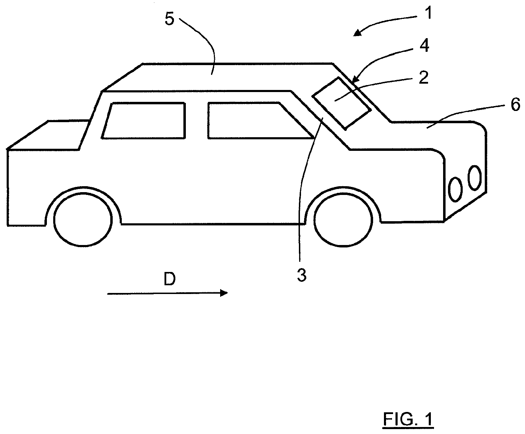

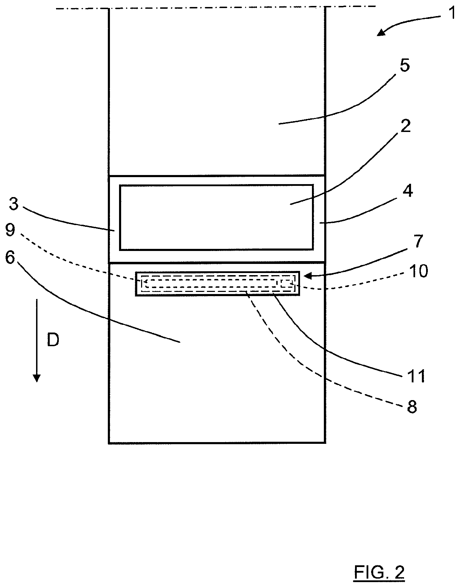

With reference to Figure 1 and Figure 2, a vehicle 1 comprises a windscreen 2 and so-called A-pillars; a first A-pillar 3 at a right-hand side of the windscreen 2 and a second A-pillar 4 at a left-hand side of the windscreen 2. The A-pillars are well-known in the field of vehicles, and run to a roof 5 of the vehicle 1. The right-hand side and left-hand side are defined when viewing along the vehicle in its forward running direction D. The vehicle also comprises a hood 6.

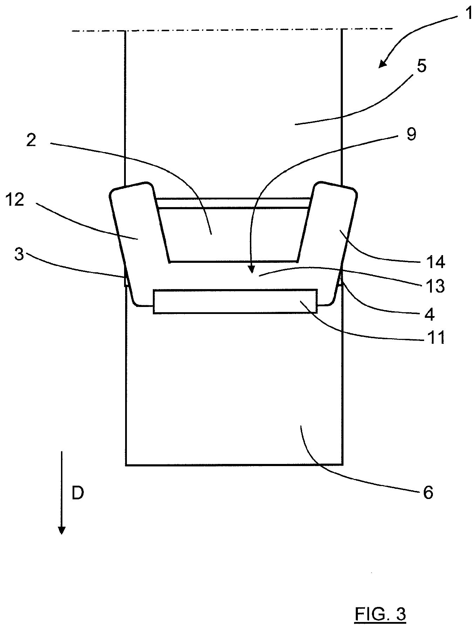

Figure 2 shows the vehicle pedestrian airbag arrangement 7 at a normal mounted position, and Figure 3 shows the vehicle pedestrian airbag arrangement 7 when the airbag 9 has been inflated, Figure 2 and Figure 3 showing a partial top view of the front part of the vehicle 1.

The vehicle pedestrian airbag arrangement 7 is positioned at the rear side of the hood 6 and comprises a housing 8, an airbag 9, a pyrotechnic device 10 arranged for inflating the airbag 9 in the event of a collision, and a lid 11.

In the event of a collision with a pedestrian, it is desirable that the pedestrian's impact with the vehicle 1 is alleviated, and therefore the airbag 9 is mounted in such a way that when inflated it is arranged to at least partly cover the windscreen 2 and the A-pillars 3, 4, as indicated in Figure 3. In this way, the inflated airbag 6 relieves some of the impact force. The windscreen 2 has been found to be a suitable energy absorber and thus not so severe to hit as the A-pillars 3, 4, and the airbag 7 has been shaped accordingly, here shown to have a U-shape.

The airbag is made out of a first airbag part 12, a second airbag part 13 and a third airbag part 14, which parts 12, 13, 14 are sewn together. When inflated, the first airbag part 12 is intended to at least partly cover the first A-pillar 3, the second airbag part 13 is intended to at least partly cover the windscreen 2, and the third airbag part 14 is intended to at least partly cover the second A-pillar 4.

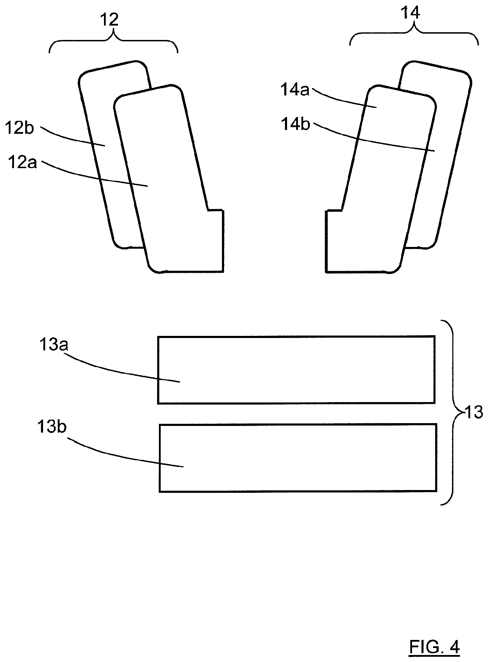

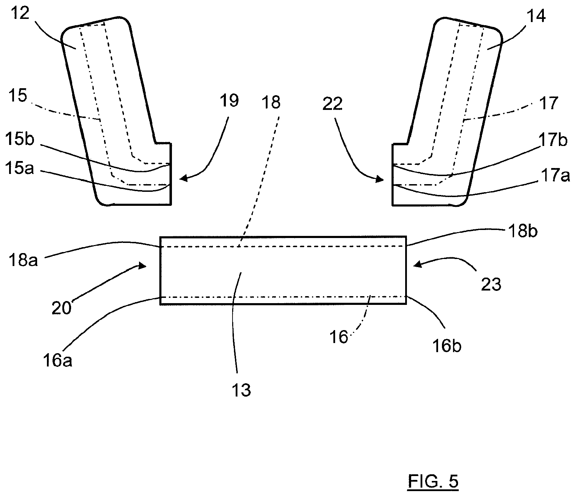

With reference to Figure 4, each of these parts 12, 13, 14 is made out of a sheet pair constituted by a corresponding first sheet 12a, 13a, 14a and second sheet 12b, 13b, 14b. With reference also to Figure 5, for each sheet pair 12a, 12b; 13a, 13b; 14a, 14b, the first sheet 12a, 13a, 14a and second sheet 12b, 13b, 14b are sewn together by corresponding seams; the first airbag part 12 with a first seam 15, the second airbag part 13 with a second seam 16 and a fourth seam 18, and the third airbag part 14 with a third seam 17. The seams 15, 16, 17 are indicated with dash-dotted lines where visible, and with dashed lines where hidden.

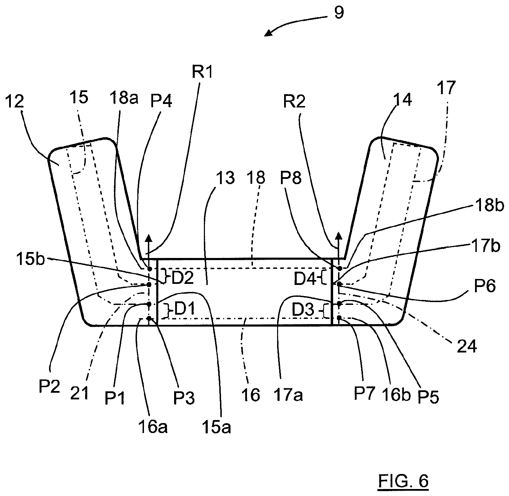

With reference to Figure 5 and Figure 6, the first airbag part 12 comprises a first airbag aperture 19 and the second airbag part 13 comprises a second airbag aperture 20, where the first airbag part 12 and the second airbag part 13 are attached to each other by means of a first circumferential seam 21 such that the first airbag aperture and the second airbag aperture are connected to each other. Furthermore, the third airbag part comprises a third airbag aperture 22 and the second airbag part comprises a fourth airbag aperture 23, where the third airbag part 14 and the second airbag part 13 are attached to each other by means of a second circumferential seam 24 such that the third airbag aperture 22 and the fourth airbag aperture 23 are connected to each other. By means of this arrangement, the first airbag part 12, the second airbag part 13 and the third airbag part comes 14 into a fluid connection with each other via the apertures 19, 20; 22, 23.

The first seam 15 comprises a first seam first end 15a at the first airbag aperture 19, the second seam 16 comprises a second seam first end 16a at the second airbag aperture 22, the third seam 17 comprises a third seam first end 17a at the third airbag aperture 22 and the fourth seam 18 comprises a fourth seam first end 18a at the second airbag aperture 23.

Furthermore, the first seam 15 comprises a first seam second end 15b at the first airbag aperture 19, the second seam 16 comprises a second seam second end 16b at the fourth airbag aperture 23, the third seam 17 comprises a third seam second end 17b at the third airbag aperture 22 and the fourth seam 18 comprises a fourth seam second end 18b at the fourth airbag aperture 23.

When the airbag 9 is inflated, the second seam 16 is arranged to face the hood 5, and the fourth 18 seam is arranged to face away from the hood 5.

When the airbag parts 12, 13, 14 are attached to each other, the first airbag aperture being 19 connected to the second airbag aperture 20 and the third airbag aperture 22 being connected to the fourth airbag aperture 23, the first seam 15, second seam 16, third seam 17 and fourth seam 18 all intersect a circumferential seam 21, 24 such that each end 15a, 15b, 16a, 16b, 17a, 17b, 18a, 18b of said seams 15, 16, 17, 18 either is positioned on a corresponding circumferential seam 21, 24, or at another side of a corresponding circumferential seam 21, 24 than the major part of the corresponding seam 15, 16, 17, 18. In Figure 6, the first seam 15, second seam 16, third seam 17 and fourth seam 18 all intersect and pass a circumferential seam 21, 24.

According to the present invention, with reference to Figure 6, the seams that are closest to each other when intersecting a circumferential seam 21, 24 are positioned a corresponding certain distance D1, D2, D3, D4 from each other when intersecting said circumferential seam 21, 24, such that at each circumferential seam 21, 24, each distance D1, D2, D3, D4 is creating an offset in a corresponding direction along the corresponding circumferential seam 21, 24. These directions are directed such that when the airbag 9 is inflated, the first airbag part 12 and the third airbag part 14 are angularly rotated towards the windscreen 2. Seen from the left-hand side of the vehicle 1, the angular rotation of the first airbag part 12 and the third airbag part 14 is performed in a clockwise direction.

More in detail, where the first airbag part 12 is attached to the second airbag part 13 by means of the first circumferential seam 21, the first seam 15 intersects the first circumferential seam 21 at two positions, a first position P1 closer to the first seam first end 15a than the first seam second end 15b, and a second position P2 closer to the first seam second end 15b than the first seam first end 15a. The first seam first end 15a is thus positioned between the first position P1 and the first airbag aperture 19, and the first seam second end 15b is thus positioned between the second position P2 and the first airbag aperture 19.

At a first distance D1 from the first position P1 along the first circumferential seam 21 in a first direction R1, the second seam 16 intersects the first circumferential seam 21 at a third position P3. Furthermore, at a second distance D2 from the second position P2 along the first circumferential seam in the first direction R1, the fourth seam intersects the first circumferential seam at a fourth position P4.

In the same way, at the other side, where the third airbag part 14 is attached to the second airbag part 13 by means of the second circumferential seam 24, the third seam 17 intersects the second circumferential seam 24 at two positions, a fifth position P5 closer to the third seam first end 17a than the third seam second end 17b, and a sixth position P6 closer to the third seam second end 17b than the third seam first end 17a. The third seam first end 17a is thus positioned between the fifth position P5 and the third airbag aperture 23, and the third seam second end 17b is thus positioned between the sixth position P6 and the third airbag aperture 23.

At a third distance D3 from the fifth position P5 along the second circumferential seam 24 in a second direction R2, the second seam 16 intersects the second circumferential seam 24 at a seventh position P7. Furthermore, at a fourth distance D4 from the sixth position P6 along the second circumferential seam 24 in the second direction R2, the fourth seam 18 intersects the second circumferential seam 24 at an eight position P8. All intersection positions P1, P2, P3, P4, P5, P6, P7, P8 are indicated by an imagined black dot.

Furthermore, each first sheet 12a, 13a, 14a and corresponding second sheet 12b, 13b, 14c may be formed from one piece of material that is folded along one side and attached by means of a seam along the other side. Roughly, the seams that are marked with dashed lines, being hidden, may in this example constitute folding markings instead.

The seams 15, 16, 17, 18; 21, 24 are generally in the form of bondings, and may for example be constituted by glue bondings. The pyrotechnic device 10 is generally constituted by an inflating device.

All airbag parts 12, 13, 14 may in a previously known manner comprises baffles or wall parts that divide the total volume of each airbag part 12, 13, 14 into smaller sub-volumes. Each such wall suitably comprises apertures or valve flaps.

The airbag 9 does not have to be a pedestrian protections airbag, but may be any type of airbag in a vehicle where a certain inflation direction of at least one part of the airbag is desired.

For example, the first distance D1, the second distance D2, the third distance D3 and the fourth distance D4 may be equal or may have different values. These distances may also be pair-wise equal. This may depend on the shape of the airbag.

The distances D1, D2, D3 D4 may each have a length that is less than 50% of the total length of the corresponding circumferential seam 21, 24. For example, at least one of these distances D1, D2, D3 D4 may have a length that exceeds either 1/3 of the total length of the corresponding circumferential seam 21, 24, 1/6 of the total length of the corresponding circumferential seam 21, 24 or 1/10 of the total length of the corresponding circumferential seam 21, 24.

Terms like equal are not to be interpreted as mathematically exact, but within what is practically obtainable.

In Figure 6, the first airbag part 12 and the third airbag part 14 are shown to be threaded onto the second airbag part 13, but which airbag part that is threaded onto which airbag part may of course vary. There has to be an overlap, allowing the circumferential seam, or more generally a circumferential bonding, to be made.

The first seam 15, second seam 16, third seam 17 and fourth seam 18 may stop at the corresponding circumferential seam or continue a certain distance past it, but there has to be an intersection in order to obtain an airbag that is sealed. In the examples described, the first seam 15, second seam 16, third seam 17 and fourth seam 18 are shown to continue to the edge of each airbag part 12, 13, 14, stopping at the respective airbag aperture 19, 20.

## Claims

1. An airbag (6) arranged to be inflated by an inflating device (10), the airbag (6) comprising three airbag parts (12, 13, 14), each airbag part (12, 13, 14) comprising at least a first sheet (12a, 13a, 14a) and a second sheet (12b 13b, 14b) being attached to each other, the first airbag part (12) comprises a first airbag bonding (15) that is attaching a first sheet (12a) with a second sheet (12b), said first air bag bonding (15) by itself defines a first airbag aperture (19), the third airbag part (14) comprising a third airbag bonding (17) that is attaching a first sheet (14a) with a second sheet (14b), said third air bag bonding by itself defines a third airbag aperture (22) such that each one of the first and third air bag parts (12; 14) are joined by one airbag bonding (15; 17) each so as to design the first and third air bag parts (12; 14) having one airbag aperture (19; 22) each and the second airbag part (13) comprises two bondings, a second airbag bonding (16) and a fourth airbag bonding (18), that are attaching a first sheet (13a) with a second sheet (13b), the second airbag bonding (16) and the fourth airbag bonding (18) together defining between them two apertures, a second airbag aperture(20) and a fourth airbag aperture (23), comprised in the second airbag part (13), said first airbag part (12) and said second airbag part (13) being attached to each other by means of a first circumferential bonding (21) such that the first airbag aperture (19) and the second airbag aperture (20) are connected to each other and said third airbag part (14) and said second airbag part (13) being attached to each other by means of a second circumferential bonding (24) such that the third airbag aperture (22) and the fourth airbag aperture (23) are connected to each other such that the first airbag part 12, the second airbag part 13 and the third airbag part 14 are in fluid connection with each other, , each airbag bonding (15; 16, 18; 17) having ends (15a, 15b; 16a, 16b, 18a, 18b; 17a, 17b) intersecting a circumferential bonding (21, 24) at a corresponding position (P1, P2; P3, P7, P4, P8; P5, P6) such that each airbag bonding (15; 16, 18; 17) intersects at least twice with a circumferential bonding (21, 24), **characterized in that** for a pair of apertures (19 and 20 respectively 23 and 22) facing each other and being in fluid communication with each other, there are pairs of airbag bondings (15, 16; 15, 18; 16, 17; 17, 18) comprised in different airbag parts (12, 13, 14), which pair of airbag bondings (15, 16; 15, 18; 16, 17; 17, 18) at their ends (15a, 16a; 15b, 18a; 16b, 17a; 17b, 18b) where intersecting a circumferential bonding (21, 24) at corresponding positions (P1, P3; P2, P4; P7, P5; P6, P8) and positioned a corresponding certain distance (D1, D2, D3, D4) from each other thus creating an offset between pairs of corresponding positions (P1, P3; P2, P4 respectively P7, P5; P6, P8) along the corresponding circumferential bonding (21 respectively 24).

2. An airbag according to claim 1, **characterized in that** the airbag comprises a first airbag part (12) and a second airbag part (13), the first airbag part (12) comprising a first airbag bonding (15) that is attaching a first sheet (12a) with a second sheet (12b) and running to a first airbag aperture (19), and the second airbag part (13) comprising a second airbag bonding (16) running to a second airbag aperture (20), the first airbag part (12) being attached to the second airbag part (13) by a first circumferential bonding (21) such that said airbags part (12, 13) are in fluid connection with each other via said apertures (19, 20), each one of the first airbag bonding (15) and the second airbag bonding (16) intersecting the first circumferential bonding (21) at least at one corresponding position (P1, P2, P3), where, for a first airbag bonding (15) and a second airbag bonding (16) that are closer to each other than to any other airbag bonding when intersecting the circumferential bonding (21), the airbag bondings (15, 16) are positioned a corresponding certain distance (D1) from each other when intersecting said circumferential bonding (21), said distance (D1) creating an offset in a corresponding direction along the corresponding circumferential bonding (21).

3. An airbag according to claim 2, **characterized in that** the airbag comprises a third airbag part (14) comprising a third airbag bonding (17) that is attaching a first sheet (14a) with a second sheet (14b) and running towards a third airbag aperture (22), the second airbag part comprising a fourth airbag bonding (18) that is attaching the first sheet (13a) with the second sheet (13b), the second airbag bonding (16) and the fourth airbag bonding (18) running between the second airbag aperture (20) and a fourth airbag aperture (23) comprised in the second airbag part (13), where the third airbag part (14) is attached to the second airbag part (13) by a second circumferential bonding (24) such that the airbag parts (12, 13, 14) are in fluid connection with each other, on one hand, via the first airbag aperture (19) and the second aperture (20), and, one the other hand, via the third airbag aperture 22 and the fourth airbag aperture (23).

4. An airbag according to any one of the claims 2 or 3, **characterized in that** each first sheet (12a, 13a, 14a) is attached to the corresponding second sheet (12b 13b, 14b) by means of bondings only.

5. An airbag according to any one of the claims 2 or 3, **characterized in that** each first sheet (12a, 13a, 14a) and corresponding second sheet (12b 13b, 14b) is formed from one piece of material that is folded along one side and bonded along at least one other side.

6. An airbag according to any one of the previous claims, **characterized in that** each distance (D1, D2, D3 D4) has a length that exceeds 1/10 of the total length of the corresponding circumferential seam (21, 24).

7. An airbag according to any one of the previous claims 1-5, **characterized in that** each distance (D1, D2, D3 D4) has a length that exceeds 1/6 of the total length of the corresponding circumferential seam (21, 24).

8. An airbag according to any one of the previous claims 1-5, **characterized in that** each distance (D1, D2, D3 D4) has a length that exceeds 1/3 of the total length of the corresponding circumferential seam (21, 24).

9. An airbag according to any one of the previous claims, **characterized in that** the airbag (6) is comprised in a pedestrian protection airbag arrangement.

## Patentansprüche

1. Airbag (6), der so angeordnet ist, dass er mit einer Füllvorrichtung (10) gefüllt wird, wobei der Airbag (6) drei Airbagteile (12, 13, 14) umfasst, wobei jeder Airbagteil (12, 13, 14) mindestens eine erste Lage (12a, 13a, 14a) und eine zweite Lage (12b, 13b, 14b) umfasst, die aneinander befestigt sind, der erste Airbagteil (12) eine erste Airbagverbindung (15) umfasst, mit der eine erste Lage (12a) an einer zweiten Lage (12b) befestigt wird, wobei die erste Airbagverbindung (15) selbst eine erste Airbagöffnung (19) definiert, der dritte Airbagteil (14) eine dritte Airbagverbindung (17) umfasst, mit der eine erste Lage (14a) an einer zweiten Lage (14b) befestigt wird, die dritte Airbagverbindung selbst eine dritte Airbagöffnung (22) derart definiert, dass von dem ersten und dritten Airbagteil (12; 14) jeder jeweils durch eine Airbagverbindung (15; 17) verbunden ist, sodass der erste und dritte Airbagteil (12; 14) jeweils so ausgestaltet sind, dass sie eine Airbagöffnung (19; 22) aufweisen, und der zweite Airbagteil (13) zwei Verbindungen, eine zweite Airbagverbindung (16) und eine vierte Airbagverbindung (18), umfasst, mit denen eine erste Lage (13a) an einer zweiten Lage (13b) befestigt wird, die zweite Airbagverbindung (16) und die vierte Airbagverbindung (18) gemeinsam dazwischen zwei Öffnungen, eine zweite Airbagöffnung (20) und eine vierte Airbagöffnung (23), umfassen, die in dem zweiten Airbagteil (13) enthalten sind, der erste Airbagteil (12) und der zweite Airbagteil (13) über eine erste Umfangsverbindung (21) derart aneinander befestigt sind, dass die erste Airbagöffnung (19) und die zweite Airbagöffnung (20) miteinander verbunden sind, und der dritte Airbagteil (14) und der zweite Airbagteil (13) über eine zweite Umfangsverbindung (24) derart aneinander befestigt sind, dass die dritte Airbagöffnung (22) und die vierte Airbagöffnung (23) derart miteinander verbunden sind, dass der erste Airbagteil (12), der zweite Airbagteil (13) und der dritte Airbagteil (14) fluidmäßig miteinander in Verbindung stehen, wobei jede Airbagverbindung (15; 16, 18; 17) Enden (15a, 15b; 16a, 16b, 18a, 18b; 17a, 17b) aufweist, die eine Umfangsverbindung (21, 24) an einer entsprechenden Stelle (P1, P2; P3, P7, P4, P8; P5, P6) derart schneiden, dass jede Airbagverbindung (15; 16, 18; 17) mindestens zweimal eine Umfangsverbindung (21, 24) schneidet, **dadurch gekennzeichnet, dass** für ein Paar Öffnungen (19 und 20 beziehungsweise 23 und 22), die einander gegenüberliegen und miteinander fluidmäßig in Verbindung stehen, Paare von Airbagverbindungen (15, 16; 15, 18; 16, 17; 17, 18) in verschiedenen Airbagteilen (12, 13, 14) vorhanden sind, wobei die Paare von Airbagverbindungen (15, 16; 15, 18; 16, 17; 17, 18) an ihren Enden (15a, 16a; 15b, 18a; 16b, 17a; 17b, 18b) eine Umfangsverbindung (21, 24) an entsprechenden Stellen (P1, P3; P2, P4; P7, P5; P6, P8) schneiden und in einem entsprechenden bestimmten Abstand (D1, D2, D3, D4) zueinander platziert sind, wodurch ein Versatz zwischen Paaren entsprechender Stellen (P1, P3; P2, P4 beziehungsweise P7, P5; P6, P8) entlang der entsprechenden Umfangsverbindung (21 beziehungsweise 24) entsteht.

2. Airbag nach Anspruch 1, **dadurch gekennzeichnet, dass** der Airbag einen ersten Airbagteil (12) und einen zweiten Airbagteil (13) umfasst, wobei der erste Airbagteil (12) eine erste Airbagverbindung (15) umfasst, mit der eine erste Lage (12a) an einer zweiten Lage (12b) befestigt wird und die zu einer ersten Airbagöffnung (19) verläuft, und der zweite Airbagteil (13) eine zweite Airbagverbindung (16) umfasst, die zu einer zweiten Airbagöffnung (20) verläuft, wobei der erste Airbagteil (12) über eine erste Umfangsverbindung (21) derart an dem zweiten Airbagteil (13) befestigt ist, dass die Airbagteile (12, 13) über die Öffnungen (19, 20) in Fluidverbindung miteinander stehen, wobei die erste Airbagverbindung (15) und die zweite Airbagverbindung (16) jeweils die erste Umfangsverbindung (21) zumindest an einer entsprechenden Stelle (P1, P2, P3) schneiden, wo, bei einer ersten Airbagverbindung (15) und einer zweiten Airbagverbindung (16), die näher beieinander als an einer beliebigen anderen Airbagverbindung liegen, wenn sie die Umfangsverbindung (21) schneiden, die Airbagverbindungen (15, 16) in einem entsprechenden bestimmten Abstand (D1) zueinander platziert sind, wenn sie die Umfangsverbindung (21) schneiden, wobei der Abstand (D1) einen Versatz in einer entsprechenden Richtung entlang der entsprechenden Umfangsverbindung (21) erzeugt.

3. Airbag nach Anspruch 2, **dadurch gekennzeichnet, dass** der Airbag einen dritten Airbagteil (14) umfasst, der eine dritte Airbagverbindung (17) umfasst, mit der eine erste Lage (14a) an einer zweiten Lage (14b) befestigt wird und die zu einer dritten Airbagöffnung (22) hin verläuft, wobei der zweite Airbagteil eine vierte Airbagverbindung (18) umfasst, mit der die erste Lage (13a) an der zweiten Lage (13b) befestigt wird, wobei die zweite Airbagverbindung (16) und die vierte Airbagverbindung (18) zwischen der zweiten Airbagöffnung (20) und einer vierten Airbagöffnung (23) verlaufen, die in dem zweiten Airbagteil (13) enthalten sind, wo der dritte Airbagteil (14) an dem zweiten Airbagteil (13) über eine zweite Umfangsverbindung (24) derart befestigt ist, dass die Airbagteile (12, 13, 14) einerseits über die erste Airbagöffnung (19) und die zweite Öffnung (20) und andererseits über die dritte Airbagöffnung (22) und die vierte Airbagöffnung (23) fluidmäßig in Verbindung miteinander stehen.

4. Airbag nach Anspruch 2 oder 3, **dadurch gekennzeichnet, dass** jede erste Lage (12a, 13a, 14a) an der entsprechenden zweiten Lage (12b, 13b, 14b) ausschließlich über Verbindungen befestigt ist.

5. Airbag nach Anspruch 2 oder 3, **dadurch gekennzeichnet, dass** jede erste Lage (12a, 13a, 14a) und entsprechende zweite Lage (12b, 13b, 14b) aus einem Stück Material geformt ist, das eine Seite entlang zusammengefaltet und zumindest eine weitere Seite entlang verbunden ist.

6. Airbag nach einem der vorhergehenden Ansprüche 1 bis 5, **dadurch gekennzeichnet, dass** jeder Abstand (D1, D2, D3, D4) eine Länge aufweist, die länger ist als 1/10 der Gesamtlänge der entsprechenden Umfangsnaht (21, 24).

7. Airbag nach einem der vorhergehenden Ansprüche 1 bis 5, **dadurch gekennzeichnet, dass** jeder Abstand (D1, D2, D3, D4) eine Länge aufweist, die länger ist als 1/6 der Gesamtlänge der entsprechenden Umfangsnaht (21, 24).

8. Airbag nach einem der vorhergehenden Ansprüche 1 bis 5, **dadurch gekennzeichnet, dass** jeder Abstand (D1, D2, D3, D4) eine Länge aufweist, die länger ist als 1/3 der Gesamtlänge der entsprechenden Umfangsnaht (21, 24).

9. Airbag nach einem der vorhergehenden Ansprüche, **dadurch gekennzeichnet, dass** der Airbag (6) in einer Fußgängerschutz-Airbaganordnung enthalten ist.

## Revendications

1. Airbag (6) conçu pour être gonflé par un dispositif de gonflage (10), l'airbag (6) comprenant trois parties d'airbag (12, 13, 14), chaque partie d'airbag (12, 13, 14) comprenant au moins une première feuille (12a, 13a, 14a) et une deuxième feuille (12b, 13b, 14b) mutuellement attachées, la première partie d'airbag (12) comprenant une première liaison d'airbag (15) qui attache la première feuille (12a) à la deuxième feuille (12b), ladite première liaison d'airbag (15) définissant elle-même une première ouverture d'airbag (19), la troisième partie d'airbag (14) comprenant une troisième liaison d'airbag (17) qui attache la première feuille (14a) à la deuxième feuille (14b), ladite troisième liaison d'airbag définissant elle-même une troisième ouverture d'airbag (22), la première et la troisième partie d'airbag (12 ; 14) étant chacune assemblée par une liaison d'airbag (15 ; 17), chacune étant telle que la première et la troisième partie d'airbag (12 ; 14) sont conçues pour présenter chacune une ouverture d'airbag (19 ; 22) et la deuxième partie d'airbag (13) comprenant deux liaisons, une deuxième liaison d'airbag (16) et une quatrième liaison d'airbag (18), qui attachent la première feuille (13a) à la deuxième feuille (13b), la deuxième liaison d'airbag (16) et la quatrième liaison d'airbag (18) définissant ensemble deux ouvertures entre elles, une deuxième ouverture d'airbag (20) et une quatrième ouverture d'airbag (23), comprises dans la deuxième partie d'airbag (13), ladite première partie d'airbag (12) et ladite deuxième partie d'airbag (13) étant mutuellement attachées au moyen d'une première liaison circonférentielle (21) telle que la première ouverture d'airbag (19) et la deuxième ouverture d'airbag (20) sont mutuellement raccordées et ladite troisième partie d'airbag (14) et ladite deuxième partie d'airbag (13) étant mutuellement attachées au moyen d'une deuxième liaison circonférentielle (24) telle que la troisième ouverture d'airbag (22) et la quatrième ouverture d'airbag (23) sont mutuellement raccordées de manière que la première partie d'airbag (12), la deuxième partie d'airbag (13) et la troisième partie d'airbag (14) sont mutuellement raccordées de manière fluidique, chaque liaison d'airbag (15 ; 16, 18 ; 17) possédant des extrémités (15a, 15b ; 16a, 16b, 18a, 18b ; 17a, 17b) qui intersectent une liaison circonférentielle (21, 24) à une position correspondante (P1, P2 ; P3, P7, P4, P8 ; P5, P6) telle que chaque liaison d'airbag (15 ; 16, 18 ; 17) intersecte au moins deux fois une liaison circonférentielle (21, 24), **caractérisé en ce que,** pour une paire d'ouvertures (19 et 20 respectivement 23 et 22) se faisant face et mutuellement raccordées de manière fluidique, il existe des paires de liaisons d'airbag (15, 16 ; 15, 18 ; 16, 17 ; 17, 18) comprises dans différentes parties d'airbag (12, 13, 14), lesdites paires de liaisons d'airbag (15, 16 ; 15, 18 ; 16, 17 ; 17, 18) intersectant à leurs extrémités (15a, 16a ; 15b, 18a ;16b, 17a ; 17b, 18b) une liaison circonférentielle (21, 24) aux positions correspondantes (P1, P3 ; P2, P4 ; P7, P5 ; P6, P8) et étant mutuellement positionnées à une certaine distance correspondante (D1, D2, D3, D4), ce qui crée un décalage entre les paires de positions correspondantes (P1, P3 ; P2, P4 respectivement P7, P5 ; P6, P8) le long de la liaison circonférentielle (21 respectivement 24) correspondante.

2. Airbag selon la revendication 1, **caractérisé en ce que** l'airbag comprend une première partie d'airbag (12) et une deuxième partie d'airbag (13), la première partie d'airbag (12) comprenant une première liaison d'airbag (15) qui attache la première feuille (12a) à la deuxième feuille (12b) et se poursuit jusqu'à une première ouverture d'airbag (19), et la deuxième partie d'airbag (13) comprenant une deuxième liaison d'airbag (16) qui se poursuit jusqu'à une deuxième ouverture d'airbag (20), la première partie d'airbag (12) étant attachée à la deuxième partie d'airbag (13) par une première liaison circonférentielle (21) telle que lesdites parties d'airbag (12, 13) sont mutuellement raccordées de manière fluidique par lesdites ouvertures (19, 20), la première liaison d'airbag (15) et la deuxième liaison d'airbag (16) intersectant chacune la première liaison circonférentielle (21) au moins à une position correspondante (P1, P2, P3), où, pour une première liaison d'airbag (15) et une deuxième liaison d'airbag (16) étant plus proches l'une de l'autre que de toute autre liaison d'airbag à l'intersection de la liaison circonférentielle (21), les liaisons d'airbag (15, 16) sont mutuellement positionnées à une certaine distance (D1) correspondant à l'intersection de ladite liaison circonférentielle (21), ladite distance (D1) créant un décalage dans une direction correspondante le long de la liaison circonférentielle (21) correspondante.

3. Airbag selon la revendication 2, **caractérisé en ce que** l'airbag comprend une troisième partie d'airbag (14) comprenant une troisième liaison d'airbag (17) qui attache une première feuille (14a) à une deuxième feuille (14b) et se poursuit jusqu'à une troisième ouverture d'airbag (22), la deuxième partie d'airbag comprenant une quatrième liaison d'airbag (18) qui attache la première feuille (13a) à la deuxième feuille (13b), la deuxième liaison d'airbag (16) et la quatrième liaison d'airbag (18) se poursuivant entre la deuxième ouverture d'airbag (20) et la quatrième ouverture d'airbag (23) comprise dans la deuxième partie d'airbag (13), où la troisième partie d'airbag (14) est attachée à la deuxième partie d'airbag (13) par une deuxième liaison circonférentielle (24) telle que les parties d'airbag (12, 13, 14) sont mutuellement raccordées de manière fluidique, d'une part par la première ouverture d'airbag (19) et la deuxième ouverture d'airbag (20), et d'autre part par la troisième ouverture d'airbag (22) et la quatrième ouverture d'airbag (23).

4. Airbag selon l'une quelconque des revendications 2 et 3, **caractérisé en ce que** chaque première feuille (12a, 13a, 14a) est attachée à la deuxième feuille (12b, 13b, 14b) correspondante au moyen de liaisons uniquement.

5. Airbag selon l'une quelconque des revendications 2 et 3, **caractérisé en ce que** chaque première feuille (12a, 13a, 14a) et deuxième feuille (12b, 13b, 14b) correspondante sont formées d'un seul morceau de matériau qui est plié le long d'un côté et lié le long d'au moins un autre côté.

6. Airbag selon l'une quelconque des revendications précédentes, **caractérisé en ce que** chaque distance (D1, D2, D3, D4) est supérieure à 1/10 de la longueur totale de la liaison circonférentielle (21, 24) correspondante.

7. Airbag selon l'une quelconque des revendications précédentes 1 à 5, **caractérisé en ce que** chaque distance (D1, D2, D3, D4) est supérieure à 1/6 de la longueur totale de la liaison circonférentielle (21, 24) correspondante.

8. Airbag selon l'une quelconque des revendications précédentes 1 à 5, **caractérisé en ce que** chaque distance (D1, D2, D3, D4) est supérieure à 1/3 de la longueur totale de la liaison circonférentielle (21, 24) correspondante.

9. Airbag selon l'une quelconque des revendications précédentes, **caractérisé en ce que** l'airbag (6) fait partie d'un agencement d'airbag de protection des piétons.
